Europäisches Patentamt

European Patent Office

Office européen des brevets

(11) Veröffentlichungsnummer: **0 144 608**
**B2**

(12) **NEUE EUROPÄISCHE PATENTSCHRIFT**

(45) Veröffentlichungstag der neuen Patentschrift:
10.10.90

(21) Anmeldenummer: **84111958.9**

(22) Anmeldetag: **05.10.84**

(51) Int. Cl.⁵: **B 60 K 41/04**

(54) **Verfahren und Vorrichtung zur Steuerung einer Kupplungs-Getriebe-Einheit.**

(30) Priorität: **18.11.83 DE 3341652**

(43) Veröffentlichungstag der Anmeldung:
**19.06.85 Patentblatt 85/25**

(45) Bekanntmachung des Hinweises auf die
Patenterteilung:
**13.04.88 Patenblatt 88/15**

(45) Bekanntmachung des Hinweises auf die
Entscheidung u¨ber den Einspruch:
**10.10.90 Patentblatt 90/41**

(84) Benannte Vertragsstaaten:
**DE FR GB IT NL SE**

(56) Entgegenhaltungen:
**EP-A-0 000 960      DE-A-3 108 920**
**DE-A-2 811 574      DE-A-3 138 371**
**DE-A-2 933 075      DE-A-3 139 985**
**DE-A-2 933 714      US-A-4 389 910**
**DE-A-3 012 896      US-A-4 411 174**
**DE-A-3 012 897**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **OP DE Beeck, Peter, Dipl.-Ing.**
**Koninginnestraat 2**
**B-9771 Nokere (BE)**
Erfinder: **Wüst, Rainer, Dipl.-Ing.FH**
**Im Krügele 11/1**
**D-7135 Wiernsheim (DE)**
Erfinder: **Stelter, Norbert, Dipl.-Ing.**
**Talstrasse 17**
**D-7251 Weissach (DE)**

(56) Entgegenhaltungen:
**AUTOMOBILTECHNISCHE ZEITSCHRIFT, Vol. 5,**
**Nr. 6, Juni 1983, Franckh'sche Verlagshandlung**
**Stuttgart K. LORENZ, R. LARISCH "Einsatz des**
**Viergang-Automatikgetriebes 4 HP 22 mit**
**elektronisch-hydraulischer Steuerung" Seiten**
**401-405**

EP 0 144 608 B2

Courier Press, Leamington Spa, England.

**Beschreibung**

Die Erfindung betrifft ein Verfahren und eine Vorrichtung nach der Gattung des Hauptanspruchs, die z.B. aus der DE—A—2811574 bekannt ist.

Üblicherweise wird eine automatische Getriebesteuerung nach folgenden Kriterien ausgelegt: Entweder soll sie eine möglichst ökonomische oder eine möglichst leistungsorientierte Fahrweise zulassen. Aufgrund der Eigenschaften des Ottomotors ist es nicht möglich, beide Kriterien zugleich zu erfüllen. Deshalb kommt häufig nur ein Kompromiß zwischen beiden Extrema in Frage, da ein rein verbrauchsorientiertes Schaltprogramm nicht genügend Sicherheitsreserven bei kritischen Verkehrssituationen bietet und bei einem leistungsorientierten Schaltprogramm der Kraftstoffverbrauch zu hoch ist.

Eine weitere Möglichkeit ist die manuelle Umschaltung zwischen einem "Economy"- und einem "Power"-Programm. (Automobiltechnische Zeitschrift 85, Heft 6/1983, Seite 401—405). Bei dieser Lösung muß der Fahrer erst einen Umschalter betätigen, bevor er das entsprechende Schaltpropramm zur Verfügung gestellt bekommt. Weiterhin werden dem Fahrer nur zwei alternative Extrema angeboten, die entweder eine verbrauchsorientierte oder eine leistungsorientierte Fahrweise zulassen.

Ferner kann dieser Getriebeautomat bei Kurvenfahrten oder beim Bremsen oder beim Übergang zum Schubbetrieb (Heruntergehen vom Fahrpedal) nicht situationsgerecht schalten, da ihm als einziger Informationsgeber über die Verkehrssituation nur die momentane Fahrpedalinformation vom Fahrzeugführer zur Verfügung steht. Geht der Fahrer am Kurveneingang oder vor dem Bremsen oder beim Übergang in den Schubbetrieb vom Fahrpedal, so leitet der Getriebeautomat eine Hochschaltung ein. Gibt der Fahrer ausgangs der Kurve oder nach dem Bremsvorgang oder nach Beendigung des Schubbetriebs wieder Gas, so muß die Automatik erst zurückschalten, bevor der Fahrer die angeforderte Leistung bekommt. Weiterhin kann ein.

Zeitverlust für das "Suchen" und "Betätigen" des Umschalters entstehen, falls kurzfristig, (z.B. aufgrund der Verkehrssituation), vom "Economy-" auf das "Power"-Programm umgeschaltet werden soll.

In der DE—A 28 11 574 wird eine Automatisierung der manuellen Umschaltung vorgeschlagen; eine Programmsteuereinheit wird dann vom verbrauchsoptimalen auf den leistungsoptimalen Betrieb umgeschaltet, wenn die (momentane) Auslenkungsgeschwindigkeit des Fahrpedals einen vorbestimmten Wert überschreitet. Wegen der nier fehlenden Speicherwirkung muß jedesmal, wenn zügig gefahren werden soll oder muß, von neuem durch schnelles Durchtreten des Fahrpedals das leistungsoptimale Schaltprogramm angefordert werden, was sich letzlich in erhöhtem Kraftstoffverbrauch und "ruckiger" Fahrweise äußert.

Aufgabe der Erfindung ist es daher, eine Steuerung für eine Kupplungs-Getriebe-Einheit zu schaffen, die sich, ausgehend von einem möglichst verbrauchsoptimalen Schaltprogramm, dem Fahrverhalten des Fahrers und der gerade vorherrschenden Fahrbzw. Verkehrssituation anpaßt, ohne daß zusätzliche Bedienelemente betätigt werden müssen.

Diese Aufgabe wird erfindungsgemäß durch die kennziehnenden Merkmale des Anspruchs 1 gelöst. Weitere, die Erfindung ausgestaltende Merkmale sind in den Unteransprüchen enthalten.

Die Vorteile, die mit der Erfindung hauptsächlich erzielt werden, sind darin zu sehen, daß mit einfachen Mitteln eine Steuerung für eine Kupplungs-Getriebe-Einheit geschaffen ist, die sich, ausgehend von einem möglichst verbrauchsoptimalen Schaltprogramm, dynamisch an das Fahrverhalten des Fahrers und die gerade vorherrschende Fahr- bzw. Verkehrssituation anpaßt, ohne daß zusätzliche Bedienelemente betätigt werden müssen. Durch den "stetigen" Übergang vom verbrauchsorientierten zum leistungsorientierten Schaltprogramm kann dem Fahrer jeweils die Fahrleistung gegeben werden, die er anfordert, wobei in allen Bereichen immer auf möglichst niedrigen Kraftstoffverbrauch geachtet wird. Neben der Reduzierung des Kraftstoffverbrauchs wird zusätzlich die Fahrsicherheit erhöht, und zwar durch die situationsgerecht ausgeführten Schaltvorgänge, so auch in Kurven, beim Bremsen und bei Schubbetrieb. Durch die Reduzierung der Schaltvorgänge wird der Getriebe- und Kupplungsverschließ vermindert und der Fahrkomfort weiter erhöht.

Die Erfindung ist beispielhaft in den Zeichnungen dargestellt und wird nachstehend erläutert. Es zeigt.

Fig. 1 ein Blockschaltbild er erfindungsgemäßen Steuerung für eine Kupplungs-Getriebe-Einheit,

Fig. 2 ein Blockschaltbild für eine Prioritätensteuerung,

Fig. 3—5 zeigen weitere Ausführungen des Blockschaltbildes nach Fig. 1,

Fig. 6 ein Blockschaltbild für die Realisierung der Steuerung mittels eines Digitalrechners.

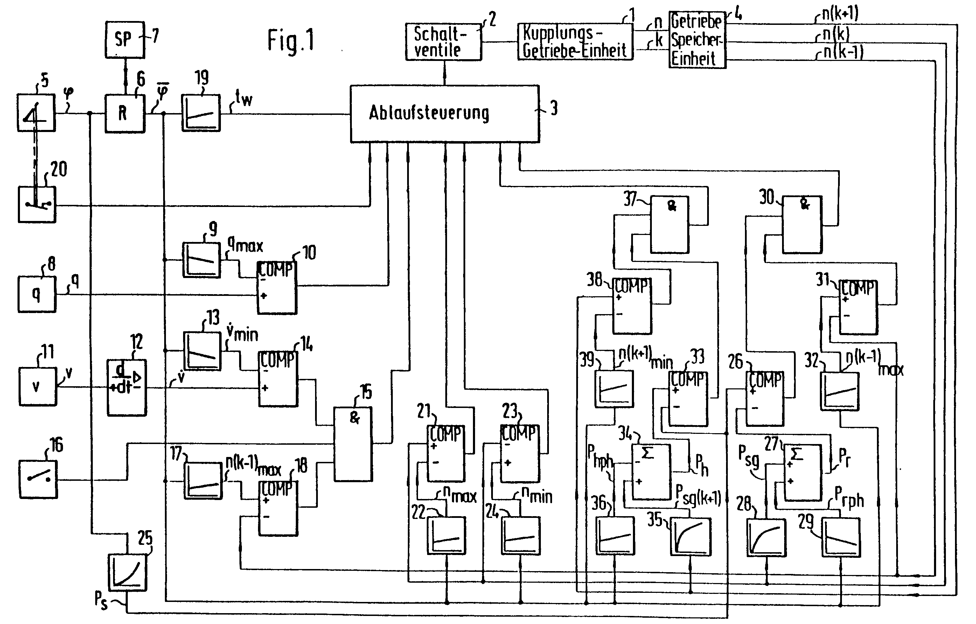

In Fig. 1 ist mit 1 eine Kupplungs-Getriebe-Einheit bezeichnet. Schaltventile 2 dienen dazu, eine oder mehrere Kupplungen zu betätigen bzw. die Gänge zu wechseln. Die Schaltventile 2 erhalten ihre Signale von einer Ablaufsteuerung 3. Eine Getriebe-Speichereinheit 4 erhält von der Kupplungs-Getriebe-Einheit 1 die Werte Getriebeausgangsdrehzahl n und eingelegter Gang k. In der Getriebe-Speichereinheit 4 werden die Werte Getriebeeingangsdrehzal n(k), Getriebeeingangsdrehzahl im nächstniedrigen Gang n(k—1) und Getriebeeingangsdrehzahl im nächsthöheren Gang n(k + 1) zur weiteren Verarbeitung bereitgehalten; diese werden aus der Getriebeausgangsdrehzahl n und dem eingelegten Gang k in einer nicht gezeigten Rechnereinheit berechnet. Ferner gibt ein Fahrpedal 5 ein der Fahrpedalstellung proportionales Fahrpedalsignal φ ab.

## EP 0 144 608 B2

Diese Parameter werden üblicherweise zur Getriebesteuerung herangezogen. Wie aus dem Blockschaltbild und der nachfolgenden Beschreibung zu entnehmen ist, geht zusätzlich die Querbeschleunigung, die Verzögerung und der Schubbetrieb in die Getriebesteuerung ein. Darüber hinaus erhält die Getriebesteuerung eine "Lernfähigkeit", d. h., eine Fähigkeit, die Schaltvorgänge optimal an den Fahrstil des jeweiligen Fahrers, der gerade das Fahrzeug bewegt, und an die gerade vorherrschende Fahr- bzw. Verkehrssituation anzupassen.

Zur Realisierung dieser Lernfähigkeit wird die Tatsache herangezogen, daß sich der Fahrstil des Fahrers bzw. dessen Reaktion auf Verkehrssituationen in erster Linie in unterschiedlichem Niedertreten des Fahrpedals äußert. Die Fahrpedalstellung bzw. ihre Änderung in der Vergangenheit und der Gegenwart kann daher als repräsentative Größe für die Gewinnung eines Steuerparameters herangezogen werden, um diese "Lernfähigkeit" realisieren zu können; dieser Steuerparameter wird nachfolgend Fahrpedalaktivität $\bar{\varphi}$ genannt.

Dazu fragt eine Fahrpedalrechnereinheit 6 das Fahrpedalsignal $\varphi$ zyklisch oder antizyklisch ab und speichert den abgetasteten Wert $\varphi(t)$ in der Fahrpedalspeichereinheit 7 ab. In dieser sind $(m + 1)$-Werte $\varphi$ des Fahrpedalsignals aus $(m + 1)$ vergangenen Abtastintervallen $\triangle T$ abgespeichert; diese werden in jedem Abtastintervall zyklisch erneuert. Die Fahrpedalrechnereinheit 6 berechnet aus den abgespeicherten Werten über eine gewichtete Summe die Fahrpedalaktivität $\bar{\varphi}$.

Ein Querbeschleunigungssensor 8 erfaßt die Querbeschleunigung des Fahrzeuges und gibt ein ihr entsprechendes Signal q ab. Über einen Kennlinienwandler 9 wird aus der Fahrpedalaktivität $\bar{\varphi}$ ein Wert $q_{max}$ bestimmt, der die obere Grenze für eine Hochschaltung darstellt. Ein Komparator 10 vergleicht q mit $q_{max}$. Ist $q > q_{max}$, so gibt der Komparator 10 ein Signal, das einen eventuellen Hochschaltvorgang unterbindet, an die Ablaufsteuerung 3 ab.

Ein Geschwindigkeitssensor 11 erfaßt die Fahrzeuggeschwindigkeit und erzeugt ein Geschwindigkeitssignal v, aus dem ein Differenzierer mit Vorzeichenumkehr 12 ein Verzögerungssignal $\dot{v}$ gewinnt. Ein Kennlinienwandler 13 formt die Fahrpedalaktivität $\bar{\varphi}$ in ein Signal $\dot{v}_{min}$ um, das die minimale Verzögerung darstellt, oberhalb der noch ein Rückschaltvorgang angefordert wird. Ein Komparator 14 vergleicht $\dot{v}$ mit $\dot{v}_{min}$; ist $\dot{v} < \dot{v}_{min}$, wird kein Rückschaltsignal an ein UND-Glied 15 abgegeben, ist $\dot{v} > \dot{v}_{min}$, wird ein Rückschaltsignal an das UND-Glied 15 abgegeben. Ferner erhält das UND-Glied 15 ein Signal von einem Bremspedalschalter 16, wenn das Bremspedal betätigt ist. Ein Kennlinienwandler 17 ordnet der Fahrpedalaktivität $\bar{\varphi}$ eine Maximaldrehzahl im nächstniedrigen Gang $n(k - 1)_{max}$ zu. Ein Komparator 18 vergleicht $n(k - 1)_{max}$ mit $n(k - 1)$, das er von der Getriebespeichereinheit 4 erhält; ist $n(k - 1) > n(k - 1)_{max}$, erfolgt kein Rückschaltsignal an das UND-Glied 15, ist die Bedingung nicht erfüllt, so wird ein Rückschaltsignal an das UND-Glied 15 abgegeben. Nur wenn alle drei Bedingungen erfüllt sind, gibt das UND-Glied 15 ein Rückschaltsignal an die Ablaufsteuerung 3 ab.

Ein Kennlinienwandler 19 erzeugt aus der Fahrpedalaktivität $\bar{\varphi}$ ein Wartezeitsignal $t_w$, das der Ablaufsteuerung 3 zugeführt wird, zur Bestimmung der Wartezeit, bis hochgeschaltet wird.

Ein Fahrpedalschalter 20 gibt bei nicht gedrücktem Fahrpedal (Schubbetrieb) ein Signal an die Ablaufsteuerung 3 ab, damit nicht hochgeschaltet wird.

Ein Komparator 21 vergleicht ständig die aktuelle Getriebeeingangsdrehzahl n(k) von der Getriebespeichereinheit 4 mit der Maximaldrehzahl $n_{max}$, die über einen Kennlinienwandler 22 aus der Fahrpedalaktivität $\bar{\varphi}$ bestimmt wird. Ist $n > n_{max}$, so gibt der Komparator 21 ein Hochschaltsignal an die Ablaufsteuerung 3 ab; ist $n < n_{max}$, wird kein Signal abgegeben. Ein Komparator 23 dient zum laufenden Vergleich der aktuellen Getriebeeingangsdrehzahl n(k) von der Getriebespeichereinheit 4 mit der vom Kennlinienwandler 24 aus der Fahrpedalaktivität $\bar{\varphi}$ bestimmten Minimaldrehzahl $n_{min}$. Ist $n < n_{min}$, so wird ein Rückschaltsignal an die Ablaufsteuerung 3 gegeben, andernfalls nicht. Die Funktionen der Komparatoren 21 und 23 haben vor allen anderen und die Ablaufsteuerung 3 angeschlossenen Komponenten Vorrang, da sie als Schutzfunktionen für Motor und Getriebeeinheit dienen.

Ein Kennlinienwandler 25 erzeugt aus dem Fahrpedalsignal $\varphi$ einer Leistungssollwert $P_s$. Ein Komparator 26 vergleicht den Leistungssollwert $P_s$ mit einer Rückschaltleistung $P_r$. Die Rückschaltleistung $P_r$ wird durch ein Addierglied 27 gebildet, aus der Summe einer Schaltgrenzleistung $P_{sg}$ und einer Rückschaltpunkthystereseleistung $P_{rph}$. Die Schaltgrenzleistung $P_{sg}$ wird durch einen Kennlinienwandler 28, der die Schaltlinie nachbildet, aus der Getriebeeingangsdrehzahl n(k) gewonnen, die Rückschaltpunkthystereseleistung $P_{rph}$ mittels eines Kennlinienwandlers 29 aus der Fahrpedalaktivität $\bar{\varphi}$. Falls der Leistungssollwert $P_s$ größer ist als die Rückschaltleistung $P_r$ gibt der Komparator 26 ein Rückschaltsignal an ein UND-Glied 30 ab. Ein Komparator 31 überprüft, ob die Drehzahl im nächstniedrigen Gang $n(k - 1)$ aus der Getriebespeichereinheit 4 nicht höher ist als die Maximaldrehzahl im nächstniedrigen Gang $n(k - 1)_{max}$, die durch einen Kennlinienwandler 32 aus der Fahrpedalaktivität $\bar{\varphi}$ bestimmt wird; ist das nicht der Fall, gibt der Komparator 31 ein Rückschaltsignal an ein UND-Glied 30 ab. Nur wenn von beiden Komparatoren 26 und 31 zugleich Rückschaltsignale vorliegen, erhält die Ablaufsteuerung 3 von dem UND-Glied 30 den Befehl zum Rückschalten.

Die Anforderung für eine Hochschaltung läuft auf ähnliche Weise ab: Ein Komparator 33 vergleicht die angeforderte Solleistung $P_s$ mit einer Hochschaltleistung $P_h$. Die Hochschaltleistung $P_h$ wird in einem Subtrahierglied 34 aus der Differenz einer Schaltgrenzleistung im nächsthöheren Gang $P_{sg}(k + 1)$ und einer Hochschalthystereseleistung $P_{hph}$ bestimmt. Die Schaltgrenzleistung im nächsthöheren Gang $P_{sg}(k + 1)$ wird durch einen Kennlinienwandler 35, der eine Schaltlinie im nächsthöheren Gang nachbildet, aus der

3

Drehzahl im nächsthöheren Gang (aus der Getriebespeichereinheit 4) bestimmt. Die Hochschalthystereseleistung $P_{hph}$ erhält man aus einem Kennlinienwandler 36 aus der Fahrpedalaktivität $\bar{\varphi}$. Falls die Solleistung $P_s$ kleiner als die Hochschaltleistung $P_h$ ist, gibt der Komparator 33 ein Hochschaltsignal an ein UND-Glied 37 ab, sonst nicht.

Ein Komparator 38 vergleicht die Drehzahl im nächsthöheren Gang $n(k + 1)$ (aus der Getriebespeichereinheit 4) mit einer Minimaldrehzahl im nächsthöhren Gang $n(k + 1)_{min}$; die Minimaldrehzahl im nächsthöheren Gang $n(k + 1)_{min}$ wird über einen Kennlinienwandler 39 aus der Fahrpedalaktivität $\bar{\varphi}$ ermittelt. Ist $n(k + 1) > n(k + 1)_{min}$, so gibt der Komparator 38 ein Hochschaltsignal an das UND-Glied 37 ab, andernfalls nicht.

Nur wenn von beiden Komparatoren 33 und 38 Hochschaltsignale vorliegen, gibt das UND-Glied 37 an die Ablaufsteuerung 3 den Befehl zum Hochschalten. Zum besseren Verständnis seien noch einige Anmerkungen gemacht:

Die Funktionsblöcke 26, 27 und 29 sowie 33, 34 und 36 dienen der "Schaltberuhigung", d. h., daß das Getriebe nicht dauernd Hoch- bzw. Rückschaltvorgänge durchführt, wenn sich der Betriebspunkt des Systems an der Schaltlinie bewegt. Die Schaltlinie wird also zu einer "Schalthysterese" auseinandergezogen.

Die Parameter, die die Gangwahl bestimmen, lassen sich mit der Fahrpedalaktivität $\bar{\varphi}$ variieren (aus den Angaben in den Klammern ist zu ersehen, wie sich die Werte mit ansteigender Fahrpedalaktivität verändern):

— Schaltgrenze für Hochschaltung (erhöhen),
— Schaltgrenze für Rückschaltung (verringern),
— Schalthysteresenbreite (verringern),
— Minimaldrehzahl im eingelegten Gang (erhöhen),
— Maximaldrehzahl im eingelegten Gang (erhöhen),
— Minimaldrehzahl im nächsthöheren Gang (erhöhen),
— Maximaldrehzahl im nächstniedrigen Gang (erhöhen),
— Maximale Querbeschleunigung bei der noch hochgeschaltet werden kann (verringern)
— Minimale Verzögerung, um beim Bremsen eine Rückschaltung auszulösen (verringern),
— Maximal mögliche Drehzahl im nächstniedrigen Gang, die beim Bremsen noch eine Rückschaltung erlaubt (erhöhen),
— Wartezeit beim Hochschalten (erhöhen)

Alle Kennlinienwandler können oder müssen, jeweils abhängig vom eingelegten Gang k, verschiedene Kennlinien nachbilden. Diese Abhängigkeiten sind der Übersichtlichkeit wegen im Schemabild weggelassen.

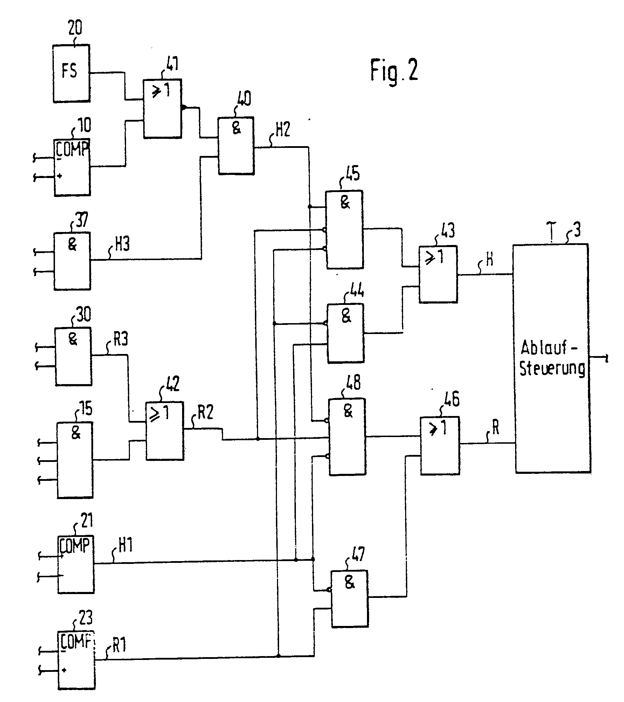

In weiterer Ausgestaltung der Erfindung wird der Ablaufsteuerung 3 eine Prioritätensteuerung vorgeschaltet, die die Eingangssignale entsprechend ihrer Wichtigkeit zur Ablaufsteuerung durchschaltet. Eine Lösung für eine derartige Prioritätensteuerung mit logischen Schaltgliedern wird anhand des Schemabildes nach Fig. 2 erklärt; dabei sind die an die Eingänge der Ablaufsteuerung 3 angeschlossenen Funktionsglieder aus Fig. 1, mit Ausnahme des Kennlinienwandlers 19, auf der linken Seite angedeutet, die Ablaufsteuerung 3 auf der rechten Seite:

Ein UND-Glied 40 schaltet nur dann ein Hochschaltsignal H3 von einem UND-Glied 37 durch, wenn an einem NICHT-ODER-Glied 41 weder vom Fahrpedalschalter 20 noch vom Komparator 10, der die Querbeschleunigung überwacht, ein Signal zur Blockierung eines Hochschaltvorgangs vorliegt.

Ein ODER-Glied 42 gibt ein Rückschaltsignal R2 ab, wenn ein Rückschaltsignal vom UND-Glied 30 oder vom UND-Glied 15, das die Bremsfunktion überwacht, oder von beiden UND-Gliedern vorliegt.

Ein ODER-Glied 43 gibt ein Hochschaltsignal H an die Ablaufsteuerung 3 ab, wenn entweder von einem UND-Glied 44 oder von einem UND-Glied 45 oder von beiden UND-Gliedern ein Signal vorliegt. Das UND-Glied 44 gibt nur dann ein Signal ab, wenn vom Komparator 21 ein Hochschaltsignal H1 und kein Rückschaltsignal R1 vom Komparator 23 vorliegt, das UND-Glied 45 gibt nur dann ein Hochschaltsignal ab, wenn vom UND-Glied 40 ein Hochschaltsignal H2 und kein Rückschaltsignal R2 vom ODER-Glied 42 und kein Rückschaltsignal R1 vom Komparator 23 vorliegt.

Ein ODER-Glied 46 gibt ein Rückschaltsignal R an die Ablaufsteuerung 3 ab, wenn entweder von einem UND-Glied 47 oder von einem UND-Glied 48 oder von beiden ein Signal vorliegt. Das UND-Glied 47 gibt nur dann ein Signal ab, wenn vom Komparator 23 ein Rückschaltsignal R1 und kein Hochschaltsignal vom Komparator 21 vorliegt. Das UND-Glied 48 gibt nur dann ein Signal ab, wenn kein Hochschaltsignal H1 vom Komparator 21 und kein Hochschaltsignal H2 vom UND-Glied 40 und vom ODER-Glied 42 ein Rückschaltsignal R2 vorliegt.

Es ist ferner sinnvoll, die Fahrpedalaktivität $\bar{\varphi}$ abhängig von bestimmten Betriebszuständen auf einen Grundwert zurückzusetzen. Dieser Grundwert kann einen Anfangswert entsprechen, auf den die Fahrpedalaktivität $\bar{\varphi}$ durch die Fahrpedalrechnereinheit 6 nach einer Unterbrechung des Zündstromes notwendigerweise gesetzt wird (Rechnerinitialisierung). Der Grundwert kann aber auch dem Wert der Fahrpedalaktivitat $\bar{\varphi}$ bei einem über $(m + 1)$ Abtastintervallen unbetätigten Fahrpedal, insbesondere dem Wert Null, entsprechen.

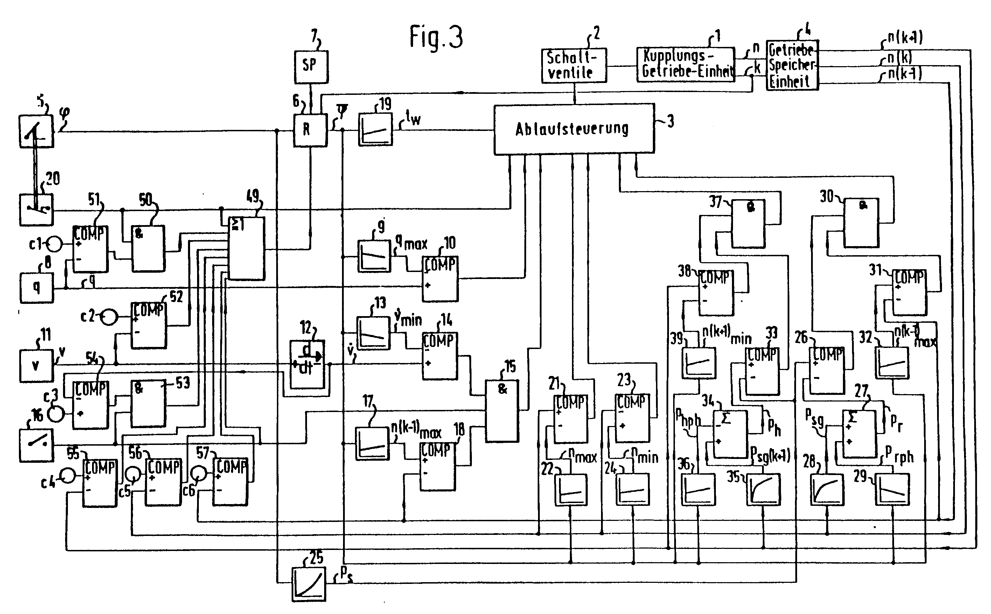

In Fig. 3 ist ein Beispiel für eine entsprechende Erweiterung des Blockschaltbildes nach Fig. 1 dargestellt. Das Zurücksetzen der Fahrpedalaktivität $\bar{\varphi}$ auf den Grundwert kann durch die Fahrpedalrechnereinheit 6 bei einem Wechsel des eingelegten Ganges k und/oer bei einem Rücksetzsignal von einem ODER-Glied 49 erfolgen.

Das ODER-Glied 49 gibt ein Rucksetzsignal an die Fahrpendalrechnereinheit 6 ab, wenn an einem oder mehreren oder allen seinen Eingängen Signale anliegen.

Diese Signale werden erzeugt von
— dem Fahrpedalschalter 20;
— einem UND-Glied 50, wenn vom Fahrpedalschalter 20 und von einem Komparator 51 gleichzeitig Signale anstehen, wobei der Komparator 51 dann ein Signal abgibt, wenn die Querbeschleunigung q kleiner ist als eine minimale Querbeschleunigung c1;
— einem Komparator 52, wenn die Geschwindigkeit $\dot{v}$ kleiner ist als eine minimle Geschwindigkeit c2;
— dem Bremspedalschalter 16;
— einem UND-Glied 53, wenn vom Bremspedalschalter 16 und von einem Komparator 54 gleichzeitig Signale anstehen, woebei dies vom Komparator 54 dann erfolgt, wenn die Verzögerung $\dot{v}$ kleiner ist als eine minimale Verzögerung c3;
— von einem Komparator 55, wenn die Getriebeeingangsdrehzahl im nächsthöheren Gang n(k + 1) kleiner ist als eine Minimaldrehzahl c4;
— von einem Komparator 56, wenn die Getriebeeingangsdrehzahl n(k) kleiner ist als eine Minimaldrehzahl c5;
— von einem Komparator 57, wenn die Getriebeeingangsdrehzahl n(k — 1) kleiner ist als eine Minimaldrehzahl c6.

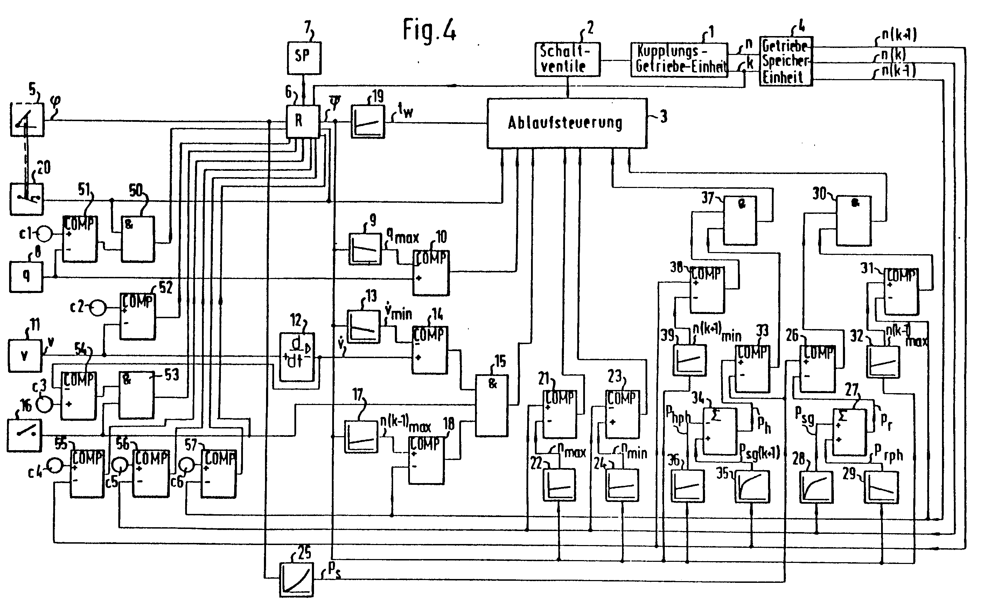

In vorteilhafter Weise können die Eingangssignale des ODER-Glieds 49 auch direkt in der Fahrpedalrechnereinheit 6 logisch verknüpft werden. Ein Beispiel dafür zeigt Fig. 4.

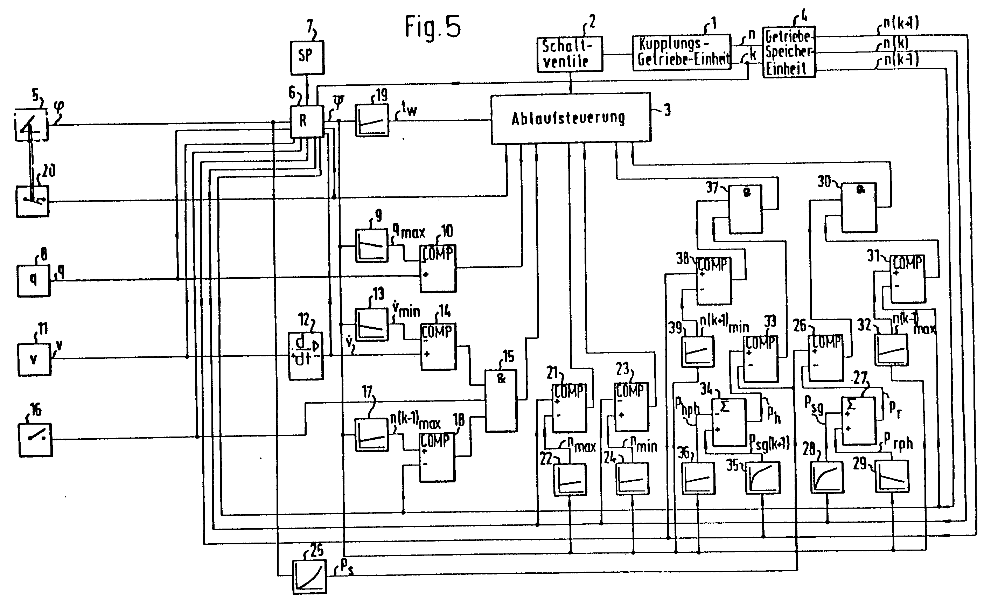

Weiter besteht die Möglichkeit, die Signale des Fahrpedalschalters 20, des Querbeschleunigungssensors 8, des Geschwindigkeitssensors 11, des Differenzierers 12, des Bremspedalschalters 16, der Getriebespeichereinheit 4 und Kupplungs-Getriebe-Einheit 1 auch direkt mit der Fahrpedalrechnereinheit 6 zu erfassen und zu Rücksetzkriterien für die Fahrpedalaktivität $\bar{\varphi}$ zu verarbeiten, wie dies im Beispiel nach Fig. 5 dargestellt ist.

Die in den Fig. 3 bis 5 zu Rücksetzkriterien verarbeiteten Signale müssen nicht zwingend in ihrer vollen Anzahl verwendet werden, es genügen auch einzelne, etwa die Änderung des eingelegten Ganges k und des Fahrpedalschalters 20 und vielleicht noch des Bremspedalschalters 16.

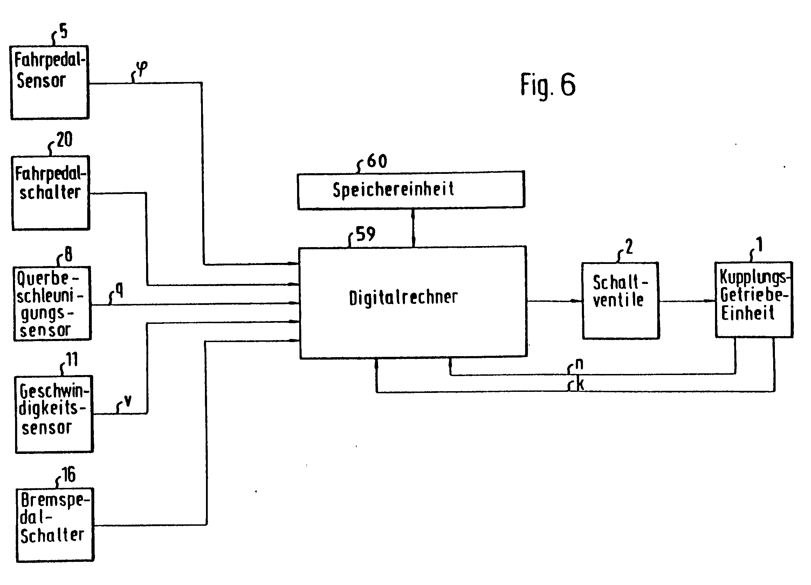

Ferner kann die Aufgabe der Rechen- und Vergleichsschaltungen sowie der Ablaufsteuerung, auch mittels eines Digitalrechners 59 gelöst werden, wie das in Fig. 6 zeichnerisch dargestellt ist. Die Signale der Sensoren Fahrpedal 5, Fahrpedalschalter 20, Querbeschleunigungssensor 8, Geschwindigkeitssensor 11 und Bremspedalschalter 16 sowie die an der Kupplungs-Getriebe-Einheit 1 erfaßten Signale Getriebeausgangsdrehzahl n und eingelegter Gang k werden in den Digitalrechner eingegeben. An den Digitalrechner 59 angeschlossen ist eine Speichereinheit 60, in der auch die Kennlinien der Kennlinienwandler gemäß den Unteransprüchen 16 bis 18 abgelegt sind. Der Digitalrechner 59 steuert direkt die Schaltventile 2 an, die die Elemente der Kupplungs-Getriebe-Einheit 1 betätigen.

## Patentansprüche

1. Verfahren zur Steuerung einer Kupplungs-Getriebe-Einheit, insbesondere eines mit einer Brennkraftmaschine ausgerüsteten Kraftfahrzeugs, wobei die Brennkraftsmaschine mittels eines Leistungssteuerorgans, vorzugsweise Fahrpedals, beeinflußbar ist und die Gänge der Getriebeeinheit wenigstens anhängig von der Stellung des Fahrpedals und des von ihm gelieferten Fahrpedalsignals sowie der Motordrehzahl automatisch geschaltet werden, dadurch gekennzeichnet, daß das der Stellung des Fahrpedals proportionale Fahrpedalsignal ($\varphi$) zyklisch und/oder antizyklisch abgetastet und abgespeichert wird, daß die über Abtastintervalle ($\triangle T$) erfaßten und abgespeicherten Fahrpedalsignalwerte ($\varphi(t — i\triangle T)$, $i = 0,1,2,..., m$) fortlaufend mit dem abgetasteten Fahrpedalsignalwert ($\varphi(t)$) aktualisiert werden und daß aus diesen abgespeicherten Fahrpedalsignalwerten eine den Fahrstil eines Fahrers und/oder Fahrsituation bewertende Fahrpedalaktivität ($\bar{\varphi}$) berechnet wird und in Abhängigkeit davon Grenzwerte für Schaltentscheidungen stetig verändert werden.

2. Verfahren nach Anspruch 1, dadurch gekennzeichnet, daß die Schaltentscheidungen durch Vergleich und/oder logische Verknüpfung der Grenzwerte mit durch Messung gewonnenen Signalen, wie z.B. Querbeschleunigung (q), Verzögerung (v), Bremsvorgang, Schubbetrieb und Getriebeausgangsdrehzahl (n), sowie mit den aus der Getriebeausgangsdrehzahl (n) und dem einegelegten Gang (k) berechneten Werten Getriebeeingangsdrehzahl (n(k)), Getriebeeingangsdrehzahl im nächsthöheren Gang (n(k + 1)) und Getriebeeingangsdrehzahl im nächstniedrigen Gang (n(k — 1)) getroffen werden.

3. Verfahren nach Anspruch 1 oder 2, dadurch gekennzeichnet, daß die Grenzwerte für Schaltentscheidungen, die durch die Fahrpedalaktivität ($\bar{\varphi}$) verändert werden, die Werte:
— Schaltgrenze für Hochschaltung,
— Schaltgrenze für Rückschaltung,
— Breite der zur Schaltberuhigung zu einer Schalthysterese (nachfolgend Schalthysteresenbreite genannt) auseinandergezogenen verbrauchsoptimierten Schaltlinie,

— Minimaldrehzahl im eingelegten Gang,

— Maximaldrehzahl im eingelegten Gang,

— Minimaldrehzahl im nächsthöheren Gang,

— Maximaldrehzahl im nächstniedrigen Gang,

— Maximale Querbeschleunigung, die noch eine Hochschaltung erlaubt,

— Minimale Verzögerung, oberhalb der beim Bremsen eine Rückschaltung erfolgt,

— Maximal mögliche Drehzahl im nächstniedrigen Gang, die beim Bremsen noch eine Rückschaltung zuläßt,

— Wartezeit, bis hochgeschaltet wird, umfaßt.

4. Verfahren nach Anspruch 1, dadurch gekennzeichnet, daß die Fahrpedalaktivität ($\overline{\phi}$) aus einer gewichteten Summe der abgespeicherten Fahrpedalsignalwerte ($\phi(t — i\triangle T)$; i = 0,1,2,..., m) und/oder aus der gewichteten Summe der Änderungen der Fahrpedalsignalwerte ($\phi(t — i\triangle T)$)zwischen je zwei Abtastintervallen berechnet wird.

5. Verfahren nach den Ansprüchen 1 bis 4, dadurch gekennzeichnet, daß mit wachsender Fahrpedalaktivität ($\overline{\phi}$) die Grenzwerte

— Schaltgrenze für Hochschaltung,

— Minimaldrehzahl im eingelegten Gang,

— Maximaldrehzahl im eingelegten Gang,

— Minimaldrehzahl im nächsthöheren Gang,

— Maximaldrehzahl im nächstniedrigen Gang,

— Maximal mögliche Drehzahl im nächstniedrigen Gang, die beim Bremsen noch eine Rückschaltung zuläßt,

— Wartezeit, bis hochgeschaltet wird, erhölt werden und daß die Grenzwerte

— Schaltgrenze für Rückschaltung,

— Schalthysteresentbreite,

— Maximale Querbeschleunigung, die noch eine Hochschaltung erlaubt,

— Minimale Verzögerung, oberhalb der beim Bremsen noch eine Rückschaltung erfolgt, verringert werden.

6. Verfahren nach den Ansprüchen 1 bis 5, dadurch gekennzeichnet, daß die Fahrpedalaktivität ($\overline{\phi}$) in Abhängigkeit von einem Rücksetzsignal auf einen Grundwert, insbesondere Anfangswert, gesetzt wird.

7. Verfahren nach Anspruch 6, dadurch gekennzeichnet, daß der Grundwert dem Wert der Fahrpedalaktivität ($\overline{\phi}$) bei einem über (m + 1) Abtastintervallen unbetätigten Fahrpedal entspricht.

8. Verfahren nach den Ansprüchen 6 oder 7, dadurch gekennzeichnet, daß das Rücksetzsignal aus einem oder mehreren durch Messung und/oder Rechnung gewonnenen Signal (-en), wie z.B. Querbeschleunigung (q) und/oder Verzögerung (v) und/oder Bremsvorgang und/oder Schubbetrieb und/oder Getriebeeingangsdrehzahl ($n(k)$) und/oder Getriebeeingangsdrehzahl im nächsthöheren Gang ($n(k + 1)$) und/oder Getriebeeingangsdrehzahl im nächstniedrigen Gang ($n(k — 1)$) und/oder dem eingelegten Gang (k), insbesondere bei einem Gangwechsel, direkt oder indirekt über logische Verknüpfung (-en) und/oder einen Vergleich der Signale mit definierten Grenzwerten gewonnen wird.

9. Verfahren nach den Ansprüchen 1 bis 8, dadurch gekennzeichnet, daß die durch Kennlinienwandler nachgebildeten Kennlinien jeweils gangabhängig verschieden sind.

10. Verfahren nach den Ansprüchen 1 bis 9, dadurch gekennzeichnet, daß die Kennlinien der jeweiligen Kennlinienwandler für die einzelnen Gänge durch additive Vielfache auseinander hervorgehen.

11. Vorrichtung zur Durchführung des Verfahrens nach den Ansprüchen 1 bis 10, dadurch gekennzeichnet, daß eine Fahrpedalrechnereinheit (6) und eine zugehörige Speichereinheit (7) sowie Kennlinienwandler (9, 13, 17, 19, 22, 24, 25, 28, 29, 32, 35, 36, 39), Sensoren (5, 8, 11, 16, 20), Komparatoren (10, 14, 18, 21, 23, 26, 31, 33, 38, 51, 52, 54 bis 56), logische Schaltkreise, Summierer (27, 34), ein Differenzierer (12) und eine Ablaufsteuerung (3) vorgesehen sind, wobei die Fahrpedalrechnereinheit (6) die Fahrpedalsignalwert ($\phi(t)$) zyklisch und/oder antizyklisch abtastet und die über (m + 1) Abtastintervalle ($\triangle T$) erfaßten und in der Speichereinheit (7) abgespeicherten Fahrpedalsignalwerte ($\overline{\phi}(t — i\triangle T)$; i = 0,1,2,..., m) laufend aktualisiert und aus diesen Werten die Fahrpedalaktivität ($\overline{\phi}$) berechnet und an die Kennlinienwandler zur gezielten Veränderung der Grenzwerte von Schaltentscheidungen ausgibt und daß die durch die Sensoren erfaßten Signale:

— Querbeschleunigung (q);

— Bremsvorgang;

— Schubbetrieb;

— Fahrzeuggeschwindigkeit (v), aus dem mittels des Differenzierers ein Verzögerungssignal ($\dot{v}$) gewonnen wird;

— Getriebeausgangsdrehzahl (n) und eingelegter Gang (k), aus der eine Getriebe-Speichereinheit (4) die Signale

— Getriebeeingangsdrehzahl ($n(k)$)

— Getriebeeingangsdrehzahl im nächsthöheren Gang ($n(k + 1)$)

— Getriebeeingangsdrehzahl im nächstniedrigen Gang ($n(k — 1)$) berechnet und ausgibt;

— Leistungssollwertsignal ($P_s$), das mittels des einen Kennlinienwandlers (25) aus der Fahrpedalstellung ($\phi$) bestimmt wird;

durch die Komparatoren mit den Grenzwerten verglichen und/oder in den logischen Schaltkreisen zu Schaltsignalen verarbeitet werden und an die Ablaufsteuerung (3) zur Weiterverarbeitung abgegeben werden und daß die Wartezeit ($t_w$), bis hochgeschaltet wird, durch den einen Kennlinienwandler (19) aus der Fahrpedalaktivität ($\overline{\varphi}$) bestimmt und an die Ablaufsteuerung ausgegeben wird.

12. Vorrichtung nach Anspruch 11, dadurch gekennzeichnet, daß eine aus logischen Schaltkreisen aufgebaute Prioritätensteuerung vorgesehen ist, welche die in die Ablaufsteuerung eingegebenen Schaltsignale logisch miteinander verknüpft.

13. Vorrichtung nach den Ansprüchen 11 und 12, dadurch gekennzeichnet, daß die Prioritätensteuerung Bestandteil der Ablaufsteuerung (3) ist.

14. Vorrichtung nach den Ansprüchen 9 bis 13, dadurch gekennzeichnet, daß ein Digitalrechner vorgesehen ist, der die Aufgabe der Rechen- und Vergleichsschaltungen sowie der Ablaufsteuerung übernimmt.

15. Vorrichtung nach Anspruch 14, dadurch gekennzeichnet, daß als Kennlinienwandler dienende (lösch- und programmierbare) Nur-Lese-Speicher (ROM, PROM, EPROM) vorgesehen sind, in denen Kennlinien quasikontinuierlich abgespeichert sind.

## Claims

1. A method of controlling a clutch-transmission unit, in particular of a motor vehicle equipped with an internal combustion engine, wherein the internal combustion engine can be influenced by a power control member, preferably an accelerator pedal, and the gears of the transmission unit are automatically changed at least as a function of the position of the accelerator pedal and of the accelerator pedal signal delivered thereby and of the engine speed, characterised in that the accelerator pedal signal ($\varphi$), which is proportional to the position of the accelerator pedal, is scanned cyclically and/or anti-cyclically and is stored, that the accelerator pedal signal values ($\varphi(t - i\triangle T)$, $i = 0,1,2,\ldots, m$) detected over scanning intervals ($\triangle T$) and stored are updated continuously with the scanned accelerator pedal signal value ($\varphi(t)$), and that accelerator pedal activity ($\overline{\varphi}$) which evaluates the driving style of a driver and/or driving situation is calculated from these stored accelerator pedal signal values and limit values for gear-changing decisions are steadily altered as a function thereof.

2. A method according to claim 1, characterized in that the gear-changing decisions are made by comparison and/or logic operation on the limit values with signals obtained by measurement, such as transverse acceleration (q), deceleration (v), braking process, thrust and transmission output speed (n), and with the values of transmission input speed (n(k)), transmission input speed in the higher adjacent gear (n(k + 1)) and transmission input speed in the lower adjacent gear (n(k − 1)) calculated from the transmission output speed (n) and the engaged gear (k).

3. A method according to claim 1 or 2, characterised that the limit valued for gear-changing decisions which are varied by the accelerator pedal activity ($\overline{\varphi}$) comprise the values:
— gear change limit for changing up.
— gear change limit for changing down.
— width of optimised gear dividing line which is drawn out into an overlap for smoothing the change (hereinafter called overlap width).
— minimum speed in the engaged gear.
— maximum speed in the engaged gear.
— minimum speed in the higher adjacent gear.
— maximum speed in the lower adjacent gear.
— Maximum transverse acceleration which still allows the gear to be changed up.
— minimum deceleration above which a change down occurs during braking.
— maximum possible speed in the lower adjacent gear which allows a further change down during braking.
— waiting time until the gear is changed up.

4. A method according to claim 1, characterised in that the accelerator pedal activity ($\overline{\varphi}$) is calculated from a weighted sum of the stored accelerator pedal signal values ($\varphi(t - i\triangle T)$; $i = 0,1,2,\ldots, m$) and/or from the weighted sum of the variations in the accelerator pedal signal values ($\varphi(t - i\triangle T)$) between each two scanning intervals.

5. A method according to claims 1 to 4, characterised in that, as the accelerator pedal activity ($\overline{\varphi}$) increases, the limit values
— gear-change limit for changing up.
— minimum speed in the engaged gear.
— maximum speed in the engaged gear.
— minimum speed in the higher adjacent gear.
— maximum speed in the lower adjacent gear.
— maximum possible speed in the lower adjacent gear which still allows a change down during braking.
— waiting time until the gear is changed up are raised and in that the limit values.
— gear change limit for changing down.

— overlap width.

— maximum transverse acceleration which still allows a change up.

— minimum deceleration above which a change down still occurs during braking are reduced.

6. A method according to claims 1 to 5, characterised in that the accelerator pedal activity $(\bar{\varphi})$ ist set at a basic value, in particular an initial value, as a function of a reset signal.

7. A method according to claim 6, characterised in that the basic value corresponds to the value of the acelerator pedal activity $(\bar{\varphi})$ in the case of an accelerator pedal which is not actuated (m + 1) scanning intervals.

8. A method according to claims 6 or 7, characterised in that the rest signal is obtained from one or more signal(s) obtained by measurement and/or calculation, such as transverse acceleration (q) and/or deceleration (v) and/or braking process and/or thrust and/or transmission input speed (n(k)) and/or transmission input speed in the higher adjacent gear (n(k + 1)) and/or transmission input speed in the lower adjacent gear (n(k — 1)) and/or the engaged gear (k), in particular at a gear change, directly or indirectly via logic operation (s) and/or comparison of the signals with defined limit values.

9. A method according to claims 1 to 8, characterised in that the characterised curves simulated by characteristic curve transducers differ in each case as a function of the gear.

10. A method according to claims 1 to 9, characterised in that the characteristic curves of the repective characteristic curve transducers for the individual gears proceed from one another by cumulative multiples.

11. An apparatus for carrying out the method according to claims 1 to 10, characterised in that an accelerator pedal computer unit (6) and an associated memory unit (7) as well as characteristic curve transducers (9, 13, 17, 19, 22, 24, 25, 28, 29, 32, 35, 36, 39), sensors (5, 8, 11, 16, 20), comparators (10, 14, 18, 21, 23, 26, 31, 33, 38, 51, 52, 54 to 56), logic circuits, analog adders (27, 34), a differentiator (12) and a flow control means (3) are provided, wherein the accelerator pedal computer unit (6) scans the accelerator pedal signal values $(\varphi(t))$ cyclically and/or anti-cyclically and continuously updates the accelerator pedal signal values $(\varphi(t — i\triangle T): i = 0,1,2,..., m)$ detected over (m + 1) scanning intervals $(\triangle T)$ and stored in the memory unit (7) and calculates the accelerator pedal activity $(\bar{\varphi})$ from these values and outputs them to the characteristic curve transducer of the intended modification or the limit values of gear-changing decisions and in that the signals detected by the sensors:

— transverse acceleration (q);

— braking process;

— thrust;

— vehicle speed (v) from which a deceleration signal $(\dot{v})$ is obtained by means of the differentiator;

— transmission output speed (n) and engaged gear (k) from which a transmission memory unit (4) calculates and outputs the signals.

— transmission input speed (n(k)).

— transmission input speed in the higher adjacent gear (n(k + 1)).

— transmission input speed in the lower adjacent gear (n(k — 1)).

— reference power signal $(P_s)$ which is determined by means of one characteristic curve transducer (25) from the accelerator pedal position $(\varphi)$:
are compared with the limit values by the comparators and/or are processed to change signals in the logic circuits and are delivered to the flow control means (3) for further processing and that the waiting time $(t_w)$ until the gear is changed up is determined by one characteristic curve transducer (119) from the accelerator pedal activity $(\bar{\varphi})$ and is output to the flow control means.

12. An apparatus according to claim 11, characterised in that a priority control means made up of logic circuits is provided, which logically links the change signals input into the flow control means.

13. An apparatus according to claims 11 and 12, characterised in that the priority controls means is a component of the flow control means (3).

14. An apparatus according to claims 9 to 13, characterised in that a digital computer is provided, which takes over the tasks of the arithmetic and comparison circuits and of the flow control means.

15. An apparatus according to claim 14, characterised in that erasable and programmable read-only memories (ROM, PROM, EPROM) acting as characterised curve transducers are provided, in which characteristic curves are stored almost continuously.

## Revendications

1. Procédé pour commander un ensemble embrayage-boîte de vitesses, notamment d'un véhicule automobile équipé d'un moteur à combustion interne, dans lequel le moteur peut être influencé au moyen d'un organe de commande de puissance, de préférence d'une pédale d'accélération et les vitesses de l'ensemble de boîte de vitesses sont enclenchées automatiquement au moins en fonction de la position de la pédale d'accélération et du signal de pédale d'accélération qu'elle fournit, ainsi que de la vitesse de rotation du moteur, caractérisé en ce que le signal de pédale d'accélération $(\varphi)$ proportionnel à la positon de la pédale d'accélération est exploré périodiquement et/ou apériodiquement et est enregistré, en ce que les valeurs de signaux de pédale d'accélération $(\varphi(t-i\triangle T), i = 0,1,2,..., m)$ saisis à des intervalles d'exploration $(\triangle T)$ et enregistrés sont actualisés en continu avec la valeur de signal de pédale

8

d'accélération exploré, et en ce qu'on calcule à partir de ces valeurs de signaux de pédale d'accélération enregistrés une activité de pédale d'accélération ($\overline{\phi}$) reflétant le style de conduite d'un conducteur et/ou une situation de conduite et qu'en fonction de cela, les valeurs limites pour des décisions de commutation sont modifiées en permanence.

2. Procédé selon la revendication 1, caractérisé en ce que les décisions de commutation sont prises en comparant et/ou en enchaînant logiquement les valeurs limites avec des signaux obtenus par mesure tels que, par exemple, accélération transversale (q), retard (v), freinage, utilisation du frein moteur et vitesse de rotation de sortie de la boîte (n), ainsi qu'avec les valeurs calculées à partir de la vitesse de rotation de sortie de la boîte de vitesse (n) et de la vitesse enclenchée (k): vitesse de rotation d'entrée de la boîte (n(k)), vitesse de rotation d'entrée de la boîte dans la vitesse supérieure suivante (n(k + 1)) et vitesse de rotation d'entrée de la boîte dans la vitesse inférieure suivante (n(k — 1)).

3. Procédé selon la revendication 1 ou 2, caractérisé en ce que les valeurs limites pour des décisions de commutation, qui sont modifiées par l'activité de la pédale d'accélération ($\overline{\phi}$) comportent les valeurs:
— limite de commutation pour le passage à une vitesse supérieure,
— limite de commutation pour une rétrogradation,
— largeur de la courbe de commutation optimisée en ce qui concerne la consommation, étirée pour former une hystérésis de commutation (appelée ci-après largeur d'hystérésis de commutation),
— vitesse de rotation minimale dans la vitesse enclenchée,
— vitesse de rotation maximale dans la vitesse enclenchée,
— vitesse de rotation minimale dans la vitesse supérieure suivante,
— vitesse de rotation maximale dans la vitesse inférieure suivante,
— accélération transversale maximale permettant encore un passage à la vitesse supérieure,
— retard minimal au-delà duquel s'effectue une rétrogradation lors du freinage,
— vitesse de rotation maximale possible dans la vitesse inférieure suivante qui permet encore une rétrogradation lors du freinage,
— temps d'attente jusqu'à ce que la vitesse supérieure soit passée.

4. Procédé selon la revendication 1, caractérisé en ce que l'activité de la pédale d'accélération ($\overline{\phi}$) est calculée à partir d'une somme pondérée des valeurs de signaux de pédale d'accélération enregistrées ($\phi$(t — i$\triangle$T); i = 0,1,2,..., m) et/où à partir de la somme pondérée des variations des valeurs de signaux de la pédale d'accélération ($\phi$(t — i$\triangle$T)) respectivement entre deux intervalles d'exploration.

5. Procédé selon les revendications 1 à 4, caractérisé en ce que, au fur et à mesure qu'augmente l'activité de la pédale d'accélération ($\overline{\phi}$), les valeurs limites:
— limite de commutation pour les passage à une vitesse supérieure,
— vitesse de rotation minimale dans la vitesse enclenchée,
— vitesse de rotation maximale dans la vitesse enclenchée,
— vitesse de rotation minimale dans la vitesse supérieure suivante,
— vitesse de rotation maximale dans la vitesse inférieure suivante,
— vitesse de rotation maximale possible dans la vitesse inférieure suivante permettant encore une rétrogradation lors du freinage,
— temps d'attente jusqu'à ce que la vitesse supérieure soit passée, sont augmentées, et en ce que les valeurs limites,
— limite de commutation pour la rétrogradation,
— largeur d'hystérésis de commutation,
— accélération transversale maximale permettant encore un passage à la vitesse supérieure,
— retard minimal au-delà duquel s'effectue encore une rétrogradation lors du freinage, sont diminuées.

6. Procédé selon les revendications 1 à 5, caractérisé en ce que l'activité de la pédale d'accélération ($\overline{\phi}$) est mise à une valeur de base, notamment une valeur initiale, en fonction d'une signal de remise à zéro.

7. Procédé selon la revendication 6, caractérisé en ce que la valeur de base correspond à la valeur de l'activité de la pédale d'accélération ($\overline{\phi}$), la pédale d'accélération n'étant pas actionnée sur (m + 1) intervalles d'exploration.

8. Procédé selon les revendications 6 ou 7, caractérisé en ce que le signal de remise à zéro est obtenu à partir d'un signal, ou de plusieurs signaux obtenus par mesure et/ou calcul, tels que, par exemple, accélération transversale (q) et/ou retard (v) et/ou freinange et/ou utilisation du frein moteur et/ou vitesse de rotation d'entrée de la boîte de vitesse (n(k)) et/ou vitesse de rotation d'entrée de la boîte dans la vitesse supérieure suivante (n(k + 1)) et/ou vitesse de rotation d'entrée de la boîte dans la vitesse inférieure suivante (n(k — 1)) et/ou vitesse enclenchée (k), notamment lors d'un changement de vitesse, directement ou indirectement par l'intermédiaire d'enchaînement(s) logique(s) et/ou d'une comparaison des signaux avec des valeurs limites définies.

9. Procédé selon les revendications 1 à 8, caractérisé en ce que les courbes caractéristiques reproduites par des convertisseurs de courbes sont différentes, respectivement en fonction de la vitesse enclenchée.

10. Procédé selon les revendications 1 à 9, caractérisé en ce que les courbes caractéristiques des convertisseurs de courbes respectifs pour les vitesses individuelles dérivent l'une de l'autre par des multiples additifs.

11. Dispositif pour mettre en oeuvre le procédé selon les revendications 1 à 10, caractérisé en ce qu'on

9

prévoit une unité de calcul de pédale d'accélération (6) et une unité de mémoire associée (7) ainsi que des convertisseurs de courbes caractéristiques (9, 13, 17, 19, 22, 24, 25, 28, 29, 32, 35, 36, 39), des capteurs (5, 8, 11, 16, 20), des comparateurs (10, 14, 18, 21, 23, 26, 31, 33, 38, 51, 52, 54 à 56), des circuits logiques, des additionneurs (27, 34), un différenciateur (12) et une commande séquentielle (3), l'unité de calcul de la pédale d'accélération (6) explorant cycliquement et/ou anticycliquement les valeurs de signaux de pédale d'accélération ($\varphi(t)$) et actualisant en continu les signaux de pédale d'accélération ($\varphi(t - i\triangle T)$, i = 0,1,2,... m) saisis sur (m + 1) intervalles d'exploration ($\triangle T$) et enregistrés dans l'unité de mémoire (7) et calculant, à partir de ces valeurs, l'activité de la pédale d'accélération ($\overline{\varphi}$) et l'envoyant aux convertisseurs de courbes pour faire varier de façon appropriée les valeurs limites des décisions de commutation, et en ce que les signaux saisis par les capteurs:

— accélération transversale (q),

— freinage,

— utilisation du frein moteur,

— vitesse du véhicule (v) à partir de laquelle est obtenu un signal de retardement ($\dot{v}$) au moyen du différenciateur, ·

— vitesse de rotation de sortie de la boîte de vitesses (n) et vitesse enclenchée (k) à partir de laquelle une unité de mémoire de boîte (4) calcule et envoie les signaux,

— vitesse de rotation d'entrée de la boîte (n(k)),

— vitesse de rotation d'entrée de la boîte dans la vitesse supérieure suivante (n(k + 1)),

— vitesse de rotation d'entrée de la boîte dans la vitesse inférieure suivante (n(k — 1),

— signal de valeur de consigne de puissance ($P_s$) qui est déterminé au moyen du convertisseur de courbes (25) à partir de la position de la pédale d'accélération ($\varphi$),

sont comparés par les comparateurs avec les valeurs limites et/ou traités dans les circuits logiques pour en faire des signaux de commutation, et sont envoyés à la commande séquentielle (3) pour un traitement ultérieur, et en ce que le temps d'attente ($t_w$) jusqu'au passage à la vitesse supérieure, est déterminé par l'un des convertisseurs de courbes (19) à partir de l'activité de la pédale d'accélération ($\overline{\varphi}$) et est envoyé à la commande séquentielle.

12. Dispositif selon la revendication 11, caractérisé en ce qu'on prévoit une commande de priorité constituée de circuits logiques, laquelle enchaîne ensemble logiquement les signaux de commutation introduits dans la commande séquentielle.

13. Dispositif selon les revendications 11 et 12, caractérisé en ce que la commande de priorité fait partie de la commande séquentielle (3).

14. Dispositif selon les revendications 9 à 13, caractérisé en ce qu'on prévoit un ordinateur qui assume la tâche des circuits de calcul et de comparaison ainsi que de la commande séquentielle.

15. Dispositif selon la revendication 14, caractérisé en ce qu'on prévoit des mémoires mortes (effaçables et programmables) (ROM, PROM, EPROM) servant de convertisseurs de courbes, dans lesquelles des courbes caractéristiques sont enregistrées de façon quasi-continue.

Fig.1

Fig.2

Fig.3

Fig. 4

4

Fig.5

Fig. 6

EP 0 144 608 B2